# EUROPEAN PATENT APPLICATION

(11) **EP 4 797 757 A1**
(43) Date of publication of application: **26.08.2026**
(21) Application number: 26398009.6
(22) Date of filing: 23.02.2026
(51) Int. Cl.: H04W 12/08, G07C 9/00, H04M 11/02, H04N 7/18, H04W 4/80, H04W 12/63

(54) **SYSTEM FOR DEMATERIALIZATION OF VIDEO INTERCOM AND DOORBELL SUBSYSTEMS WITH ACCESS CONTROL IN A SINGLE GLOBAL MOBILE APPLICATION**

(30) Priority: 25.02.2025 PT 2025120073
(71) Applicant: Henriques Barroso, Luis Manuel, 2780-151 Oeiras (PT); Leonova Barroso, Galina Evgenevna, 2780-151 Oeiras (PT)
(72) Inventor: Henriques Barroso, Luis Manuel, 2780-151 Oeiras (PT); Leonova Barroso, Galina Evgenevna, 2780-151 Oeiras (PT)

(57) **Abstract**

The present invention refers to an access management and intercom system based on a Non-IP IoT architecture that eliminates the need for fixed internet infrastructures and wiring in buildings. The system comprises a mobile application, a central server and a local IoT device endowed with a Bluetooth Low Energy (BLE) microcontroller and switching circuit. The solution is characterized by a triple and simultaneous security validation, integrating GPS coordinates, RSSI signal strength and a challenge-response protocol, preferably based on HMAC, for the dynamic reconstruction of local credentials. Through a "Radar" interface, the system allows the identification of devices within the local signal coverage area, releasing virtual doorbell panels and allowing audio and video communication via WebRTC protocol. The invention encompasses specific subsystems for the management of unoccupied properties, real estate intermediation, mail deliveries and hotel management, operating autonomously through the user's mobile connectivity.

## Description

### Field of invention

The present invention falls within the technological sector of integrated security and home automation systems, referring specifically to the dematerialization of physical video intercom panels and traditional doorbells in a global mobile application. The field of the invention encompasses the replacement of physical wiring infrastructures by a Non-IP (without internet protocol) IoT (Internet of Things) architecture, which combines short-range wireless communication technologies (Bluetooth Low Energy - BLE), Global Positioning System (GPS) and WebRTC (Web Real-Time Communication). More particularly, the invention focuses on the management and monitoring of physical accesses through mobile devices, operating autonomously and independent of any fixed internet infrastructure or local server network installed in the building

### Background of the invention

Traditional video intercom and access control systems historically depend on complex wiring, expensive hardware units and, frequently, a permanent connection to the local internet or Ethernet networks to allow remote functionalities, which entails high installation and maintenance costs. The state of the art describes solutions that attempt to mitigate these barriers through the use of geofences, however, these approaches remain dependent on centralized computer systems and external physical access control infrastructures to validate the entry permission. Other approaches focus merely on the adaptation or "retrofit" of legacy hardware, maintaining the dependency on the preexisting infrastructure, while proposals based on passive tags or simple proximity technologies, although eliminating electrical power, fail to locally integrate the active switching intelligence necessary for the direct actuation of locking mechanisms. Additionally, there are real-time multimedia communication systems described in the state of the art which, to function in an access control context, obligatorily require the presence of wireless (WLAN) or wired (LAN) local networks in the building for traffic routing. The present invention resolves these cumulative limitations through an architecture where the switching and validation intelligence is integrated directly into the low-consumption local hardware, eliminating the dependency on fixed networks, local servers or internet gateways in the building.

### Summary of the invention

The present invention refers to a video intercom and doorbell system with access control, founded on a Non-IP IoT architecture that operates autonomously and independent of any fixed internet infrastructure or local server network installed in the building. The system comprises a coordinated interaction between a global mobile application, a central server and an IoT signaling and control device (BLE microcontroller), which acts as a local anchor point for the management of physical accesses. The central innovation of the system resides in a dual and simultaneous location validation method, which conditions access to the virtual doorbell panel and actuation of the switching circuit (relay or transistor) to the corroboration between the GPS coordinates of the mobile device and the local reading of unique identifiers and of the RSSI (Received Signal Strength Indicator) signal strength emitted by the IoT device (BLE microcontroller). The user interface operates in "Radar" mode, allowing the visual discovery of properties within the detection range radius of the device and offering two actuation modes based on proximity: a voluntary dynamic control and an automated ("hands-free") control by approach. The communication between visitor and resident is established via WebRTC protocol, enabling real-time video calls that are signaled by an instant messaging system sent to the mobile devices of the residents. During the conversation, the system executes a continuous monitoring of the physical proximity of the visitor via RSSI, allowing the resident to grant a single temporary access authorization, valid only while the local connectivity persists. To guarantee the integrity of the operation without exposing master keys on the network, the system implements a security protocol of dynamic reconstruction of credentials and challenge-response authentication, where the access key is generated locally through the combination of seven unique identifiers (including geographic, temporal and client data). As a redundancy and fail (fallback) mechanism, the system incorporates passive QR Code tags that, in conjunction with the GPS validation, allow the identification of the location and the access to the doorbell panel even in the absence of electrical power in the IoT device.

### Description of the preferred embodiment

### System Architecture and Local IoT Device

For the realization of the present invention, the system is structured through a coordinated interaction between a mobile application, a central server and an active local IoT device, endowed with an integrated switching circuit. The system operates under a Non-IP IoT architecture that eliminates the need for fixed internet infrastructures, complex wiring or local servers in the building, since the management of the access resides in the mobile connectivity of the user itself. The IoT device is preferably constituted by a microcontroller with Bluetooth Low Energy (BLE) technology that incorporates physically said switching circuit, which can be implemented by means of a relay or a power transistor for direct actuation in electric locks or electromechanical access control systems.

### Radar Interface

The primary interface of the mobile application is the screen designated as "radar", which acts as the visual command center for the user. This radar detects and analyzes, in real time, the signals emitted by the IoT devices within the limit of the wireless signal detection range, through the capture of information transmitted via "device name" and/or "extended advertising". The radar displays the relative positions of the buildings and properties in relation to the central position of the user, simultaneously processing public data for geographic orientation and encrypted data destined for security validation. The interaction between said BLE microcontroller and said application is governed by a periodic polling mechanism of the signal strength (RSSI), which allows the system to calculate the approximate metric distance between the visitor and the access point, as well as by the comparison of the GPS coordinates obtained by the mobile device with the coordinates of the address registered in the server.

### Access to the Doorbell Panel

The access to the virtual doorbell panel is automatically released when the identifier of the building approaches the center of the radar. This process is made viable by the periodic RSSI polling mechanism between the BLE microcontroller and the mobile application, conditioned by the concomitant validation of the GPS coordinates of the visitor and of an authenticated cryptography code with associated data present in the BLE signaling. The system further incorporates passive QR Code tags, without the need for local electrical power, which contain an authenticated cryptography code in a link variable for validation by the application, allowing restricted access to the doorbell panel as an identification redundancy in the absence or failure of the active IoT device.

### WebRTC Intercommunication and Presence Monitoring

The audio and video communication between the visitor and the resident is established via WebRTC protocol, allowing real-time calls independent of traditional intercom wiring. These calls are signaled by an instant messaging system sent to the mobile devices of the residents, who can answer the call from any location with internet access. During the intercommunication session, the system executes a continuous monitoring of the physical proximity of the visitor through the RSSI signal. If the visitor moves away beyond a predefined security limit, the application triggers sound warnings and chromatic changes on the screen. If the limit is exceeded, the system proceeds to the automatic disconnection of the call and to the immediate revocation of any access control authorization that the resident may grant.

### Access Control and Security Protocol

The access control is performed through a dynamic actuation interface in the "RADAR", made active only when the RSSI analysis validates an immediate proximity security threshold to the access point, or by an automated access control by approach. In the latter, the application executes the continuous calculation of the signal strength increase to autonomously actuate the switching circuit upon reaching a pre-configured immediate proximity threshold, without direct user intervention. Additionally, the resident, when in communication via WebRTC with the visitor, can issue a single-use access authorization to the visitor's application. The actuation of the access control is rigorously protected by a challenge-response security protocol, preferably based on HMAC (Hash-Based Message Authentication Code), applied in all interaction modalities. The security is based on a dynamic reconstitution of credentials, where the cryptographic key is composed independently in the application and in the IoT device through the combination of multiple unique identifiers (preferably seven, including: latitude, longitude, client start date, application-generated number, door number, client classification and client identifier). Said device sends a random challenge (nonce) to the application, which responds with said calculated HMAC cryptographic digest, ensuring that said master key is never transmitted and that the unlocking only occurs if there is absolute coincidence between the geographic location, the physical proximity (RSSI) and the validity of the user data.

### Signaling Subsystem for Unoccupied Properties

For the management of unoccupied properties, the invention exploits the low energy consumption of the BLE microcontroller, allowing continuous operation via battery or electrical grid. Through the transmission in "device name" and/or "extended advertising" modes, the system guarantees that the property remains visible within the local coverage area of the signal. This subsystem allows the visitor to detect the property and obtain basic identification data, in addition to access to the virtual doorbell panels directly in the application. The establishment of contact or the access to detailed information of the property is conditioned to the simultaneous validation between the RSSI polling and the GPS coordinates. In scenarios of total absence of power, passive QR Code tags allow the identification of the property and the access to the contact panel via mobile network.

### Real Estate Intermediation Subsystem

This subsystem executes a bilateral confirmation and delegation of privileges protocol between the owner and the agency through the application. After said delegation, said property is automatically integrated into a digital portfolio and the virtual doorbell interface is dynamically customized with the visual identity of the mediating agency. To allow autonomous or accompanied visits, said system uses a temporary electromechanical lock controlled by a local IoT device, configured to act upon the preexisting lock. The actuation is strictly governed by the security protocol, preferably HMAC, and conditioned to the authorized time window for said visit, allowing a centralized management of dispersed assets without the need for physical key management.

### Mail and Delivery Management Subsystem

The automated mail and delivery management subsystem provides authorized access to employees without resident intervention, maintaining a historical record. The local IoT device executes the actuation of the switching circuit for opening of accesses and of mailboxes equipped with IoT devices that control electric locks. The unlocking is triggered by the detection of immediate proximity via GPS coordinates and RSSI polling, governed by the challenge-response security protocol, allowing the deposit and generating automatic delivery notifications and pickup confirmations via application.

### Hotel Management Subsystem

In hotel management, the granting of access privileges is governed by ephemeral credentials integrated in the guest's application and strictly linked to the temporal validity of the reservation. The actuation of the switching circuit for rooms and common areas is executed via the guest's application and local IoT devices, conditioned to the validation of GPS coordinates, proximity by RSSI and to a security protocol, preferably HMAC. The system allows the configuration of dynamic virtual doorbells that make it possible for the guest to receive calls from visitors directly on their smartphone, regardless of being inside or outside the hotel. Also, it establishes bidirectional communication channels with the management or reception services. The entire operation is executed via mobile network, dispensing costs with internal IP network infrastructures and local servers.

### Fixed Interface Terminal

For situations in which the visitor does not possess or does not wish to use a personal mobile device, the invention foresees the installation of a fixed interface terminal at an access point, in substitution of the traditional physical intercom panels. This terminal is configured to establish mandatory local communication with the IoT device only when validated by an immediate proximity radius via RSSI analysis and GPS coordinates. The terminal is responsible for initiating the challenge-response security protocol, preferably HMAC, and functions autonomously, independent of fixed internet network infrastructure in the building, allowing the management of WebRTC calls and the access control without the need for the visitor to operate a personal mobile device.

## Claims

1. System for the dematerialization of intercom and access control based on Non-IP IoT architecture, **characterized by** replacing the physical wiring infrastructures with a coordinated interaction between a mobile application, a central server and an active local IoT device, endowed with an integrated switching circuit composed of a relay or power transistor for direct actuation in access control systems; wherein the access to the virtual doorbell panel and the subsequent authorization for actuation of the switching circuit are strictly conditioned to a dual and simultaneous location validation, consisting of the comparison of the GPS coordinates obtained by the mobile device with the coordinates of the address registered in the server, in conjunction with the reading of the unique identifier and of the RSSI signal strength emitted locally by the IoT device via BLE technology and periodic polling mechanism; said bidirectional audio and video communication in real time being established via WebRTC protocol, enabling video calls signaled by an instant messaging system sent to the mobile devices of the residents; said communication being performed through the data network of the mobile device autonomously and independent of any IP network or fixed internet infrastructure installed in the building, said IoT device serving as the single local anchor point for the dynamic reconstruction of credentials and electromechanical actuation, guaranteeing the integrity of the operation without the transmission of master keys through the network.

2. System, according to claim 1, **characterized by** comprising a local activation subsystem based on a user interface in "Radar" mode that captures information from active IoT devices in the form of "device name" and/or "extended advertising", allowing to visualize the numbering of the buildings and their relative distance within the detection range radius of the BLE signal; wherein said access to the virtual doorbell panel is automatically released when the identifier of the building approaches the center of the radar through a periodic polling mechanism of the RSSI signal strength between said BLE microcontroller and said mobile application, conditioned by the concomitant validation of the GPS coordinates of the visitor and of an authenticated cryptography code with associated data present in the BLE signaling; further incorporating passive QR Code tags, without the need for local electrical power, which contain an authenticated cryptography code in a link variable for validation by the application and restricted access to the doorbell panel as identification redundancy in the absence or failure of the active IoT device.

3. System, according to claim 1, **characterized by** implementing a security protocol of dynamic reconstruction of credentials and local authentication by challenge-response, wherein the cryptographic key is composed independently in the application and in the IoT device through the combination of multiple unique identifiers, which preferably comprise: latitude, longitude, client start date, application-generated number, door number, client classification and client identifier; guaranteeing that the validation occurs only in the precise geographic location, conditioned to the validation of GPS coordinates and proximity by RSSI, through the sending of a random challenge, of the nonce type, from the device to the application, which responds with a cryptographic digest code, preferably HMAC, calculated over said vectors, ensuring that said master key is never transmitted through the network and that no individual user possesses access to the complete password.

4. System, according to any one of claims 1 to 3, **characterized by** establishing communication sessions via WebRTC protocol, during which said system executes a continuous proximity verification mechanism based on the periodic polling of RSSI signal monitored by the resident and by the visitor; wherein the physical moving away of the visitor in relation to the IoT device during said conversation triggers sound warnings and chromatic changes on the communication screen, said system proceeding to the automatic disconnection of the call if the moving away exceeds said defined proximity limit; further allowing that the resident issues a single-use access authorization to the visitor's application, which automatically triggers the local protocol of dynamic reconstitution of credentials and challenge-response defined in claim 3 for actuation of the integrated switching circuit, such as a relay or power transistor, without assignment of permanent privileges and validated only during the persistence of the local BLE connectivity.

5. System, according to any one of claims 1 to 3, **characterized by** comprising a signaling and asset management subsystem for unoccupied properties, wherein the local IoT device, preferably a BLE microcontroller, is configured for the continuous transmission of a unique identifier and signaling via "device name" and/or "extended advertising", operating with low energy consumption in battery or electrical grid mode; wherein the mobile application captures said signal through a user interface in "Radar" mode within the detection range radius of the BLE signal, performing the continuous proximity verification by periodic polling of the RSSI signal strength to allow the visitor to initiate a WebRTC session autonomously and independent of IP infrastructure in the building; said access to the doorbell panel being conditioned to the joint validation of GPS coordinates, of the proximity by RSSI and of the encrypted address confirmation data present in the BLE signaling, optionally integrating passive QR Code tags for redundant identification, without the need for local electrical power, which contain an authenticated cryptography code in a link variable for validation by the application and restricted access to the doorbell panel as identification redundancy in the absence or failure of the active IoT device.

6. System, according to any one of claims 1 to 3, **characterized by** comprising a real estate intermediation subsystem that facilitates said delegation of privileges between owners and agencies in a secure manner and executes a bilateral confirmation and delegation of privileges protocol via mobile application, triggering said automatic integration of the property in a digital portfolio and the dynamic customization of the virtual doorbell interface with said visual identification of the mediating agency; comprising said implementation of a temporary electromechanical lock controlled by local IoT device, configured to act upon said preexisting lock, said actuation of the switching circuits being conditioned to the validation of GPS coordinates, of proximity by RSSI and to the challenge-response security protocol defined in claim 3, allowing said centralized management of visits independently of fixed internet in said property of Non-IP architecture, ensuring that consultants and clients possess access only during the authorized period and in proven physical presence next to the property.

7. System, according to any one of claims 1 to 3, **characterized by** comprising an automated mail and delivery management subsystem that provides authorized access to employees without resident intervention, maintaining a detailed historical record and operating in Non-IP architecture; wherein said local IoT device executes said actuation of the switching circuit for opening of accesses and mailboxes equipped with IoT devices that control electric locks, for the deposit of objects of varied dimensions, independent of fixed internet network, the unlocking being triggered by the detection of immediate proximity via GPS coordinates and RSSI polling, governed by the challenge-response security protocol defined in claim 3, allowing the deposit and generating automatic delivery notifications and pickup confirmations via application.

8. System, according to any one of claims 1 to 3, **characterized by** comprising a hotel management subsystem in Non-IP architecture, wherein the granting of privileges is governed by ephemeral credentials integrated in the guest's application and strictly linked to the temporal validity of the reservation; wherein the actuation of the switching circuit for rooms and main entrances is executed via the guest's application and local IoT devices, conditioned to the triple validation of GPS coordinates, proximity by RSSI and the protocol of claim **3;** said subsystem being configured to assign dynamic virtual doorbells to each accommodation unit, which allow direct contact from visitors to said guest, as well as said establishment of bidirectional communication channels between said guest and the management services of the hotel regardless of the physical location of the guest; wherein the entire control and communication operation is executed exclusively through the connectivity of the mobile network of the users' devices, dispensing the installation or utilization of any fixed internet infrastructure or local server network in the building.

9. System, according to any one of claims 1 to 3, **characterized by** comprising a centralized management subsystem of multiple properties operated through a user interface in "Radar" mode that displays said relative position of multiple local IoT devices within the coverage area of the local BLE signal; wherein the system allows the configuration of distinct actuation profiles that enable a voluntary access control through a dynamic interface active only when validated an immediate security proximity by RSSI, and an automated access control by approach, wherein said application autonomously actuates the switching circuit upon reaching a pre-configured immediate proximity threshold, the unlocking being governed by the challenge-response security protocol defined in claim 3.

10. System, according to any one of claims 1 to 3, **characterized by** comprising a fixed interface terminal permanently installed at an access point in substitution of the traditional physical intercom panels, configured to establish mandatory local communication with the device of Non-IP IoT architecture only when validated by an immediate proximity radius via RSSI analysis and GPS coordinates; said terminal being responsible for initiating the challenge-response security protocol defined in claim 3. The fixed interface terminal functions autonomously and independent of fixed internet network infrastructure in the building, allowing the management of WebRTC calls and the access control without the need for the visitor to operate a personal mobile device.
